# EUROPEAN PATENT SPECIFICATION

(11) **EP 1 466 691 B1**
(45) Date of publication and mention of the grant of the patent: **24.01.2007**
(21) Application number: 04007736.4
(22) Date of filing: 31.03.2004
(51) Int. Cl.: B23K 1/00, B23K 1/19, B23K 1/20, B23K 35/36, C23C 22/34, F28F 19/06

(54) **Method for brazing aluminium alloy material containing magnesium using a flux comprising potassium fluorozincate**
Verfahren zum Hartlöten einer Aluminium-Magnesium-Legierung mit einem Kalium-Fluorozinkat enthaltenden Flussmittel
Procédé de brasage d'alliages en Aluminium contenant du Magnésium utilisant un flux comprenant du Fluorozincate de Potassium

(30) Priority: 08.04.2003 JP 2003103738; 25.03.2004 JP 2004088197
(43) Date of publication of application: 13.10.2004
(73) Proprietor: DENSO CORPORATION, Kariya City Aichi 448-8661 (JP); SUMITOMO LIGHT METAL INDUSTRIES, LTD., Tokyo105-8601 (JP)
(72) Inventor: Hasegawa, Yoshiharu, Kariya-city Aichi 448-8661 (JP); Miyachi, Haruhiko, Kariya-city Aichi 448-8661 (JP); Yamashita, Naoki Sumitomo Light Metal Ind., Ltd., Tokyo 105-8601 (JP); Itoh, Yasunaga Sumitomo Light Metal Ind., Ltd., Tokyo 105-8601 (JP)
(74) Representative: Müller-Wolff, Thomas

(56) References cited:
- DE-A- 10 022 840
- DE-A- 19 913 111
- PATENT ABSTRACTS OF JAPAN vol. 0152, no. 83 (M-1137), 18 July 1991 (1991-07-18) & JP 3 099795 A (FURUKAWA ALUM CO LTD), 24 April 1991 (1991-04-24)
- PATENT ABSTRACTS OF JAPAN vol. 0111, no. 60 (M-592), 23 May 1987 (1987-05-23) & JP 61 293699 A (TOYOTA CENTRAL RES & DEV LAB INC), 24 December 1986 (1986-12-24)
- PATENT ABSTRACTS OF JAPAN vol. 0111, no. 75 (M-596), 5 June 1987 (1987-06-05) & JP 62 006774 A (TOYOTA CENTRAL RES & DEV LAB INC), 13 January 1987 (1987-01-13)

## Description

The present invention relates to a method of brazing a magnesium-containing alluminum alloy material as disclosed for example in JP 03099795, which is considered to represent the most relevant state of the art. According to this reference, as a brazing sheet, rolled stock 1 cladding brazing filler alloy on one side face of a core material ot AL alloy and AL-Mg alloy plate 2, are used. Flux for brazing generates the vapor breaking the oxide film on the AL or AL alloy surface 1, 2 at ≤ 575°C. Further, the vapor or the reaction product stuck to the AL or AL alloy surface is made to non-corrosive to the AL or AL alloy in the case of cooling down to the room temp. By this method, the quality, such as good surface treatability at the following treatment of chromate treatment, etc., and excellent corrosion resistance, can be improved.

Particularly, the present invention relates to a method for brazing a magnesium-containing
aluminum alloy material exhibiting excellent brazability when applied to brazing an aluminum alloy material containing 0.2% or more of magnesium (including an aluminum alloy material clad with an Al-Si-alloy brazing material) used in cladding parts of vehicle heat exchanger tubes and the like using a fluoride-containing flux and an Al-Si-alloy brazing material in an inert gas atmosphere.

### Background Art

In the manufacture of heat exchangers for vehicles made from an aluminum alloy, such as a radiator, heater, condenser, and evaporator, aluminum plates and extruded parts are molded into a specified form, assembled into a predetermined structure, and bonded by brazing using a potassium fluoroaluminate-based flux in a heated furnace in an inert gas atmosphere.

In recent years, heat exchanger parts for vehicles with an increased hardness are demanded due to a decrease in the thickness of these parts from the viewpoint of energy and resource savings- Addition of magnesium has been conventionally one of the means for increasing hardness of aluminum materials and use of a magnesium-containing aluminum alloy material as a heat exchanger material has been proposed. However, when a magnesium-containing aluminum alloy material, particularly an aluminum alloy material containing 0.2% or more of magnesium, is bonded using the above-mentioned fluoride-containing flux, the flux may react with magnesium in the alloy to produce compounds, such as MgF₂ and KMgF₃, which reduce the activity of the flux and interfere with brazing.

A currently used fluoride-containing flux which contains potassium fluoroaluminate as a major component melts and is activated at about 560°C. Therefore, when a magnesium-containing aluminum alloy material is coated with the flux and brazed, the melted flux immediately reacts with magnesium on the surface of the aluminum alloy to produce MgF₂ and KMgF₃. During a temperature rise in the course of brazing operation, the flux continues to react, with the reaction rate being controlled by diffusion of magnesium from the inside to the surface of the material until the brazing temperature (600°C) is reached. As a result, the flux activity continues to be decreased.

A flux containing cesium fluoroaluminate has been disclosed (for example, U.S.P. No. 4,670,067) as a flux for brazing a magnesium-containing aluminum alloy material. To be applied to brazing of common heat exchangers for vehicles, however, this flux has a problem of high cost.

U.S. Patent No. 6,432,221 discloses a method of brazing aluminum and aluminum alloys in an inert gas atmosphere using a flux containing potassium fluorozincate and reports that aluminum parts, as well as an aluminum alloy (3003 alloy) part and an aluminum part, were successfully bonded.

### SUMMARY OF THE INVENTION

When potassium fluorozincate is applied to brazing of aluminum, zinc is produced by a substitution reaction with aluminum during heating for brazing and the produced zinc metal covers the brazed parts to provide corrosion resistance. This is an advantage of using the potassium fluorozincate flux. Paying an attention to potassium fluorozincate, the inventors of the present invention applied the potassium fluorozincate to brazing parts of an aluminum alloy containing 0.2% or more of magnesium to braze the parts using an Al-Si-alloy brazing material in an inert gas atmosphere.

During the course of the experiment, the inventors have found that the magnesium-containing aluminum alloy material may not be sufficiently bonded under certain brazing conditions using the potassium fluorozincate flux. As a result of further experiments and repeated studies, the inventors have found that the brazability of a magnesium-containing aluminum alloy using potassium fluorozincate is affected by the amount of potassium fluorozincate and the rate of temperature rise from initiation of the substitution reaction of the potassium fluorozincate with the aluminum alloy (550°C) to the brazing temperature.

The present invention has been completed based on these findings and has an object of providing a method for brazing a magnesium-containing aluminum alloy material exhibiting excellent brazability when applied to brazing an aluminum alloy material containing 0.2-1.0% of magnesium (including an aluminum alloy material clad with an Al-Si-alloy brazing material) used in cladding parts of vehicle heat exchanger tubes and the like using potassium fluorozincate and an Al-Si-alloy brazing material in an inert gas atmosphere.

The above object is achieved in the present invention by a method of brazing a magnesium-containing aluminum alloy material containing 0.2-1.0% (mass%) of magnesium assembled with another aluminum material according to claim 1.

In the above method for brazing a magnesium-containing aluminum alloy material, the potassium fluorozincate may be applied to the brazing part at a concentration of 5 g/m² or more and (2.5 × Mg%/T) g/m² or more, and the materials may be heated at an average temperature rising rate (T) of 0.1°C/second or more.

In the above method for brazing magnesium-containing aluminum alloy material, the potassium fluorozincate may have a composition of KZnF₃.

### BRIEF DESCRIPTION OF THE DRAWINGS

Figure 1 is a drawing illustrating the assembled state prior to brazing in a clearance filling test.
Figure 2 is a drawing illustrating the state after brazing in the clearance filling test.

### DETAILED DESCRIPTION OF THE PREFERRED EMBODIMENT

Potassium fluorozincate neither melts nor reacts with an aluminum alloy when the potassium fluorozincate is alone heated to a brazing temperature (about 600°C). However, when potassium fluorozincate caused to adhere to an aluminum alloy by coating or the like is heated, a substitution reaction starts on the aluminum alloy surface on which the potassium fluorozincate is in contact with the aluminum alloy at about 550°C to produce zinc and potassium fluoroaluminate, which is a flux component, following which the potassium fluoroaluminate reacts with magnesium in the aluminum alloy.

Since the reaction of potassium fluoroaluminate with magnesium continues up to the brazing temperature, with the reaction rate being controlled by the substitution reaction of potassium fluorozincate on the surface of aluminum alloy, the amount of magnesium reacted is less than the amount of magnesium reacted when the conventional potassium fluoroaluminate is used as a flux. The degree of activity decrease is also less than that of the conventional potassium fluoroaluminate flux.

An aluminum alloy containing 0.2-1.0% of magnesium is a material to be brazed in the present invention. When an assembled object made of this aluminum alloy or a clad aluminum alloy prepared by cladding this aluminum alloy with an Al-Si-alloy brazing material and another aluminum part are bonded by brazing using a flux in an inert gas atmosphere, the method of the present invention is characterized by applying potassium fluorozincate having a composition of KₓZn_{y}F_{z} (wherein x, y, and z are positive integers) to the brazing part at a concentration of 5 g/m² or more and (1.65 × Mg%/T) g/m² or more (wherein T is an average temperature rising rate (°C/second) of the aluminum alloy material from 550°C to the brazing temperature), and heating at an average temperature rising rate (T) of 0.1°C/second or more. As examples of the potassium fluorozincate composition, K₂ZnF₄, K₃Zn₂F₇, and KZnF₃ can be given. Of these, KZnF₃ is most preferable.

The amount of potassium fluorozincate coated in the present invention is 5 g/m² or more. If the amount of potassium fluorozincate coated is more than 30 g/m², not all the amount of the potassium fluorozincate coated by the time when the brazing temperature (about 600°C) is reached reacts with the aluminum alloy and a certain amount of potassium fluorozincate remains unreacted, thereby interfering with brazing. Therefore, the maximum amount is 30 g/m².

The amount of magnesium reacted with potassium fluoroaluminate increases with the increase in the amount of magnesium in the aluminum alloy material. Therefore, the coating amount of potassium fluorozincate must be increased to increase the amount of potassium fluoroaluminate produced by the substitution reaction with the aluminum alloy material. Such a coating amount of potassium fluorozincate should be proportional to the amount of magnesium.

In addition, since the reaction time of magnesium with potassium fluoroaluminate decreases as the average temperature rising rate from 550°C up to the brazing temperature increases, the amount of the potassium fluoroaluminate consumed also decreases and the coating amount of the potassium fluorozincate can be decreased accordingly. The coating amount is inversely proportionate to the average temperature rising rate.

The coating amount requirement for potassium fluorozincate of 5 g/m² or more and (1.65 × Mg%/T) g/m² or more has been established as a result of further studies on the above relationship. When the coating amount of potassium fluorozincate is smaller than the above range, potassium fluoroaluminate produced by the substitution reaction with the aluminum alloy is consumed by the reaction with magnesium by the time when the brazing temperature (about 600°C) is reached, thereby interfering with brazing.

As the coating method, a method of coating a powder of potassium fluorozincate as is by electrostatic dry coating or the like, a method of coating a mixture of potassium fluorozincate with water or a solvent such as acetone, and a method of roll coating a mixture of potassium fluorozincate with a binder or a solvent can be given. When coating a mixture with water or a solvent, the coating is dried to volatilize the solvent before brazing. In the present invention, the coating amount refers to the net coating amount of potassium fluorozincate .

If the average temperature rising rate of the aluminum alloy from 550°C to the brazing temperature (about 600°C) is less than 0.1°C/sec, it takes a long time for the produced potassium fluoroaluminate to react with magnesium, resulting in a decrease in the activity of the flux due to produced compounds. The brazability is thus impaired. If heated at an average temperature rising rate of 0.1°C/sec or more, the period of time from initiation of the substitution reaction of potassium fluorozincate with the aluminum alloy at around 550°C through the brazing temperature (about 600°C) can be reduced, resulting in a decrease in the amount of produced potassium fluoroaluminate reacted with magnesium. As a result, the flux activity is not reduced and excellent brazability can be obtained.

In the present invention, as a more preferable embodiment of brazing an assembled product of an aluminum alloy part containing 0.2-0.6% of magnesium and another aluminum part in an inert gas atmosphere, the potassium fluorozincate having a composition of KₓZn_{y}F_{z}(wherein x, y, and z are positive integers) is applied to the brazing parts at a concentration of 5 g/m² or more and (2.5 × Mg%/T) g/m² or more (wherein T is the average temperature rising rate (°C/second)), and heating at an average temperature rising rate of 0.1°C/second or more.

When potassium fluorozincate is coated before brazing, zinc is produced and forms a diffusion layer in the aluminum alloy, which contributes to improvement of corrosion resistance of the material.

### EXAMPLES

The present invention will be described in more detail by examples and comparative examples to demonstrate the effect of the present invention. These examples illustrate one embodiment of the present invention and should not be construed as limiting the present invention.

### Example 1

Aluminum alloys having compositions shown in Table 1 were cast. The resulting ingots were homogenized according to a conventional method. The homogenized products were subjected to hot rolling or cold rolling to produce plates with a thickness of 1.0 mm, followed by a softening treatment at 360°C for 3 hours to prepare sample plates.

Both sides of a core material, A3003 alloy (composition: Si: 0.27%, Fe: 0.6%, Cu: 0.15%, Mn: 1.2%, balance aluminum and impurities), were clad with an Al-10% Si alloy brazing material. After final rolling, the rolled product was subjected to a softening treatment at 360°C for 3 hours to obtain a brazing sheet with a thickness of 1.0 mm (the brazing material clad thickness: 100 µm on each side).

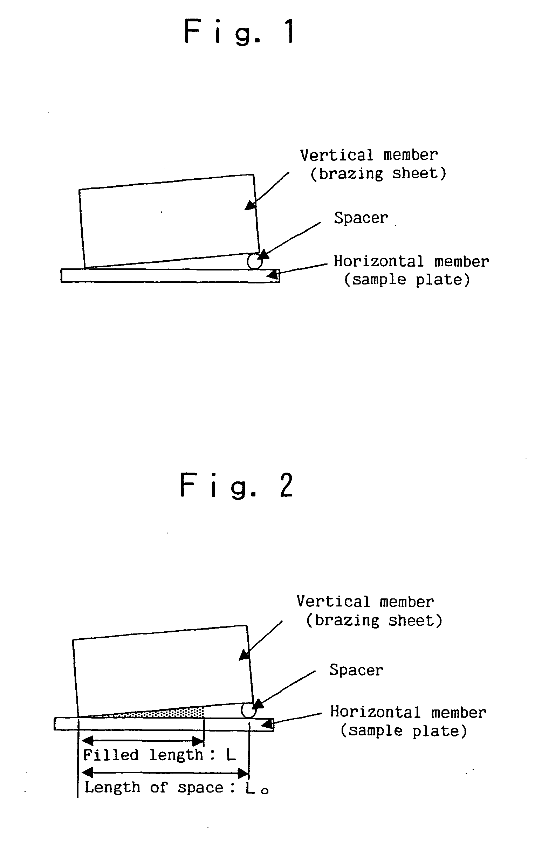

To evaluate the brazability of the sample plates using a fluoride-containing flux in an inert gas atmosphere, a clearance filling test was carried out using the brazing sheet as a vertical member and the sample plate as a horizontal member as shown in Figure 1.

Before fabricating the vertical member (brazing sheet) and the horizontal member (sample plate) into a prescribed form, each member was cut into a specified size, defatted, coated with a mixture of KZnF₃ powder, as potassium fluorozincate, and acetone, and dried to vaporize the solvent. Then, the test specimen shown in Figure 1 was assembled.

After assembling, the test specimen was placed in a furnace in a nitrogen gas atmosphere and heated to 600°C, immediately followed by cooling and brazing. The filled length (L) of the brazed test specimen (shown in Figure 2) was measured and divided by the length of the space L₀ to determine the filling ratio L/L₀, which was taken as a measure for brazability. Brazability was evaluated as "Good" when the filling ratio was 0.7 or more, as "Fair" when the filling ratio was 0.4 or more but less than 0.7, and as "Bad" when the filling ratio was less than 0.4. The results are shown in Tables 2-5.

**Table 1**

| Sample plate | Composition (mass%) | | | | |
|---|---|---|---|---|---|
| | Si | Fe | Cu | Mn | Mg |
| 1 | 0.04 | 0.05 | 0.02 | 0.01 | 0.2 |
| 2 | 0.06 | 0.04 | 0.02 | 0.03 | 0.6 |
| 3 | 0.04 | 0.07 | 0.03 | 0.02 | 1.0 |
| 4 | 0.05 | 0.03 | 0.02 | 0.03 | 1.2 |

**Table 2**

| Horizontal member | Amount of flux (g/m²) | Average temperature rising rate (T) (°C/s) | 1.65 × Mg%/T°C/s (g/m²) | Filling ratio (L/L₀) | Brazability |
|---|---|---|---|---|---|
| 1 | 3 | 0.1 | 3.3 | 0 | Bad |
| 1 | 3 | 0.2 | 1.65 | 0.09 | Bad |
| 1 | 3 | 0.4 | 0.83 | 0.15 | Bad |
| 1 | 5 | 0.1 | 3.3 | 0.73 | Good |
| 1 | 5 | 0.2 | 1.65 | 0.78 | Good |
| 1 | 10 | 0.1 | 3.3 | 0.74 | Good |
| 1 | 10 | 0.2 | 1.65 | 0.79 | Good |
| 1 | 20 | 0.1 | 3.3 | 0.77 | Good |
| 1 | 20 | 0.2 | 1.65 | 0.79 | Good |
| 1 | 30 | 0.1 | 3.3 | 0.78 | Good |
| 1 | 30 | 0.2 | 1.65 | 0.81 | Good |
| 1 | 50 | 0.1 | 3.3 | 0.51 | Fair |
| 1 | 50 | 0.2 | 1.65 | 0.55 | Fair |

**Table 3**

| Horizontal member | Amount of flux (g/m²) | Average temperature rising rate (T) (°C/s) | 1.65 × Mg%/T°C/s (g/m²) | Filling ratio (L/L₀) | Brazability |
|---|---|---|---|---|---|
| 2 | 3 | 0.1 | 9.9 | 0 | Bad |
| 2 | 3 | 0.2 | 4.95 | 0 | Bad |
| 2 | 3 | 0.4 | 2.48 | 0.15 | Bad |
| 2 | 5 | 0.1 | 9.9 | 0.12 | Bad |
| 2 | 5 | 0.2 | 4.95 | 0.71 | Good |
| 2 | 5 | 0.4 | 2.48 | 0.73 | Good |
| 2 | 10 | 0.1 | 9.9 | 0.73 | Good |
| 2 | 10 | 0.2 | 4.95 | 0.75 | Good |
| 2 | 20 | 0.1 | 9.9 | 0.74 | Good |
| 2 | 20 | 0.2 | 4.95 | 0.75 | Good |
| 2 | 30 | 0.1 | 9.9 | 0.78 | Good |
| 2 | 30 | 0.2 | 4.95 | 0.80 | Good |
| 2 | 50 | 0.1 | 9.9 | 0.50 | Fair |
| 2 | 50 | 0.2 | 4.95 | 0.53 | Fair |

**Table 4**

| Horizontal member | Amount of flux (g/m²) | Average temperature rising rate (T) (°C/s) | 1.65 × Mg%/T°C/s (g/m²) | Filling ratio (L/L₀) | Brazability |
|---|---|---|---|---|---|
| 3 | 3 | 0.1 | 16.5 | 0 | Bad |
| 3 | 3 | 0.2 | 8.25 | 0 | Bad |
| 3 | 5 | 0.1 | 16.5 | 0 | Bad |
| 3 | 5 | 0.2 | 8.25 | 0 | Bad |
| 3 | 10 | 0.1 | 16.5 | 0.15 | Bad |
| 3 | 17 | 0.1 | 16.5 | 0.70 | Good |
| 3 | 9 | 0.2 | 8.25 | 0.71 | Good |
| 3 | 10 | 0.2 | 8.25 | 0.72 | Good |
| 3 | 10 | 0.4 | 4.13 | 0.74 | Good |
| 3 | 20 | 0.1 | 16.5 | 0.71 | Good |
| 3 | 20 | 0.2 | 8.25 | 0.73 | Good |
| 3 | 30 | 0.1 | 16.5 | 0.74 | Good |
| 3 | 30 | 0.2 | 8.25 | 0.76 | , Good |
| 3 | 50 | 0.1 | 16.5 | 0.49 | Fair |
| 3 | 50 | 0.2 | 8.25 | 0.51 | Fair |

**Table 5**

| Horizontal member | Amount of flux (g/m²) | Average temperature rising rate (T) (°C/s) | 1.65 × Mg%/T°C/s (g/m²) | Filling ratio (L/L₀) | Brazability |
|---|---|---|---|---|---|
| 4 | 3 | 0.1 | 19.8 | 0 | Bad |
| 4 | 3 | 0.2 | 9.9 | 0 | Bad |
| 4 | 5 | 0.1 | 19.8 | 0 | Bad |
| 4 | 5 | 0.2 | 9.9 | 0 | Bad |
| 4 | 10 | 0.1 | 19.8 | 0 | Bad |
| 4 | 10 | 0.2 | 9.9 | 0 | Bad |
| 4 | 10 | 0.4 | 4.95 | 0.15 | Bad |
| 4 | 20 | 0.1 | 19.8 | 0.11 | Bad |
| 4 | 20 | 0.2 | 9.9 | 0.45 | Fair |
| 4 | 20 | 0.4 | 4.95 | 0.48 | Fair |
| 4 | 30 | 0.1 | 19.8 | 0.53 | Fair |
| 4 | 30 | 0.2 | 9.9 | 0.56 | Fair |
| 4 | 50 | 0.1 | 19.8 | 0.48 | Fair |
| 4 | 50 | 0.2 | 9.9 | 0.50 | Fair |

As shown in Tables 2-4, the sample plates according to the present invention exhibited excellent brazability, whereas the sample plates made from an aluminum alloy containing more than 1.0% of magnesium did not exhibit good brazability even if a large amount of KZnF₃ was applied as shown in Table 5. To achieve good brazability using sample plates made from an aluminum alloy containing 0.2-1.0% of magnesium, the coated amount of KZnF₃ must be increased as the magnesium content increases as shown in Tables 2-4.

### Comparative Example 1

The sample plates Nos. 2-3 prepared in Example 1 were used as horizontal members and the brazing sheet prepared in Example 1 was used as a vertical member. Before fabricating the vertical member (brazing sheet) and the horizontal member (sample plate) into a prescribed form, each member was cut into a specified size, defatted, and coated with potassium fluoroaluminate. The test specimen shown in Figure 1 was assembled and the clearance filling test was carried out in the same manner as in Example 1. The results are shown in Tables 6-7.

**Table 6**

| Horizontal member | Amount of flux (g/m²) | Average temperature rising rate (T) (°C/s) | Filling ratio (L/L₀) | Brazability |
|---|---|---|---|---|
| 2 | 3 | 0.1 | 0 | Bad |
| 2 | 3 | 0.2 | 0 | Bad |
| 2 | 5 | 0.1 | 0 | Bad |
| 2 | 5 | 0.2 | 0 | Bad |
| 2 | 10 | 0.1 | 0 | Bad |
| 2 | 10 | 0.2 | 0 | Bad |
| 2 | 20 | 0.1 | 0.13 | Bad |
| 2 | 20 | 0.2 | 0.15 | Bad |
| 2 | 30 | 0.1 | 0.25 | Bad |
| 2 | 30 | 0.2 | 0.70 | Good |
| 2 | 50 | 0.1 | 0.73 | Good |
| 2 | 50 | 0.2 | 0.75 | Good |

**Table 7**

| Horizontal member | Amount of flux (g/m²) | Average temperature rising rate (T) (°C/s) | Filling ratio (L/L₀) | Brazability |
|---|---|---|---|---|
| 3 | 3 | 0.1 | 0 | Bad |
| 3 | 3 | 0.2 | 0 | Bad |
| 3 | 5 | 0.1 | 0 | Bad |
| 3 | 5 | 0.2 | 0 | Bad |
| 3 | 10 | 0.1 | 0 | Bad |
| 3 | 10 | 0.2 | 0 | Bad |
| 3 | 20 | 0.1 | 0 | Bad |
| 3 | 20 | 0.2 | 0 | Bad |
| 3 | 30 | 0.1 | 0.13 | Bad |
| 3 | 30 | 0.2 | 0.44 | Fair |
| 3 | 50 | 0.1 | 0.52 | Fair |
| 3 | 50 | 0.2 | 0.72 | Good |

As shown in Tables 6 and 7, to achieve good brazability by using potassium fluoroaluminate as a flux for brazing sample plates made from an aluminum alloy with a magnesium content of 0.6% or 1.0%, the flux must be coated respectively in an amount of 30 g/m² or more or 50 g/m² or more.

According to the present invention, a method of brazing a magnesium-containing aluminum alloy material exhibiting excellent brazing performance when applied to brazing an aluminum alloy material containing 0.2-1.0% of magnesium used in cladding parts of vehicle heat exchanger tubes and the like using a potassium fluorozincate and an Al-Si-alloy brazing material in an inert gas atmosphere can be provided.

## Claims

1. A method of brazing a magnesium-containing aluminium alloy material with another aluminium material in a furnace in an inert gas atmosphere, wherein the aluminium alloy material contains 0,2 to 1 mass % of magnesium, that a potassium fluorozincate having a composition of K_{X}Zn_{Y}F_{Z}, wherein x, y and z are positive integers, is applied to a brazing part at a concentration greater than 5 g/m² and (1,65 xMg% / T) g/m² and lower than 30 g/m², wherein T is an average temperature rising rate (°C/second) of the aluminum alloy material from 550 °C to a brazing temperature, and that the materials are heated at an average temperature raising rate (Tₜ) of at least 0.1 °C/s.

2. The method for brazing a magnesium-containing aluminum alloy material according to claim 1, wherein the potassium fluorozincate is applied to the brazing part at a concentration of 5 g/m² or more and (2.5 × Mg%/T) g/m² or more, and the materials are heated at an average temperature rising rate (T) of 0.1°C/second or more.

3. The method for brazing a magnesium-containing aluminum alloy material according to claim 1 or 2, wherein the potassium fluorozincate has a composition of KZnF₃.

## Patentansprüche

1. Ein Verfahren zum Löten eines Magnesium enthaltenden Aluminium-Legierungs-Materials mit einem weiteren Aluminium-Material in einem Ofen in einer inerten Gasatmosphäre, wobei das Aluminium-Legierungs-Material 0,2 bis 1 Gewichtsprozent Magnesium enthält, wobei ein Kalium-Fluoro-Zinkat, aufweisend eine Zusammensetzung von K_{X}Zn_{Y}F_{Z}, wobei x, y und z positive ganze Zahlen sind, angewendet wird auf ein zu lötendes Teil in einer Konzentration größer als 5 g/m² und (1,65 × Mg% / T) g/m² und niedriger als 30g/m², wobei T eine mittlere Temperatur-Steigerungsrate (in °C pro Sekunde) des Aluminium-Legierungs-Materials von 550 °C auf eine Löttemperatur ist, und wobei die Materialien mit einer mittleren Temperatur Steigerungsrate (Tₜ) von mindestens 0,1 °C/s erwärmt werden.

2. Das Verfahren zum Löten eines Magnesium enthaltenden Aluminium-Legierungs-Materials nach Anspruch 1, wobei das Kalium-Fluoro-Zinkat auf ein zu lötendes Teil angewendet wird mit einer Konzentration von 5 g/m² oder mehr und (2.5 × Mg% / T) oder mehr und wobei die Materialien mit einer mittleren Temperatur-Steigerungs-Rate (T) von 0,1°C / Sekunde oder mehr erwärmt werden.

3. Das Verfahren zum Löten eines Magnesium enthaltenden Aluminium-Legierungs-Materials nach Anspruch 1 oder 2, wobei das Kalium-Fluoro-Zinkat eine Zusammensetzung von KZnF₃ aufweist.

## Revendications

1. Un procédé de brasage au four d'un alliage d'aluminium contenant du magnésium avec un autre alliage d'aluminium dans une atmosphère de gaz inerte, l'alliage d'aluminium contenant 0,2 à 1 % en masse de magnésium, un fluorozincate de potassium ayant une composition de KₓZn_{y}F_{z}, dont x, y et z sont des nombres entiers positifs, étant appliqué à un matériau de brasage à une concentration supérieure à 5 g/m² et (1,65 × Mg% / T) g/m² et inférieure à 30g/m², dont T représente le taux moyen d'augmentation de température (°C/seconde) d'un alliage d'aluminium de 550°C à une température de brasage, et que les matériaux soient chauffés à un taux moyen d'augmentation de température (Tₜ) d'au moins 0,1°C/s.

2. Un procédé de brasage d'un alliage d'aluminium contenant du magnésium conformément à la revendication 1, au cours duquel le fluorozincate de potassium est appliqué au matériau de brasage à une concentration de 5 g/m² ou plus et de (2,5 × Mg%/T) g/m² ou plus, et les matériaux sont chauffés à un taux moyen d'augmentation de température (T) d'au moins 0,1°C/s ou plus.

3. Un procédé de brasage d'un alliage d'aluminium contenant du magnésium conformément à la revendication 1 ou 2, le fluorozincate de potassium ayant une composition de KZnF₃.
